(19) Europäisches Patentamt
European Patent Office
Office européen des brevets

(11) **EP 3 223 520 A1**

(12) **EUROPEAN PATENT APPLICATION**
published in accordance with Art. 153(4) EPC

(43) Date of publication:
27.09.2017 Bulletin 2017/39

(51) Int Cl.:
**H04N 17/00** (2006.01)

(21) Application number: **15860458.7**

(22) Date of filing: **16.03.2015**

(86) International application number:
**PCT/CN2015/074278**

(87) International publication number:
**WO 2016/078262 (26.05.2016 Gazette 2016/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **19.11.2014 CN 201410662654**

(71) Applicant: **Sanechips Technology Co., Ltd.
Nanshan District
Shenzhen,
Guangdong 518055 (CN)**

(72) Inventors:
• **TAN, Zhixiong
  Shenzhen
  Guangdong 518055 (CN)**
• **TIAN, Xiaofeng
  Shenzhen
  Guangdong 518055 (CN)**

(74) Representative: **Brevalex
95, rue d'Amsterdam
75378 Paris Cedex 8 (FR)**

(54) **MEASUREMENT METHOD AND APPARATUS FOR COMPOSITE VIDEO BROADCAST SIGNAL QUALITY AND STORAGE MEDIUM**

(57) Disclosed a method for measuring quality of a Composite Video Broadcast Signal (CVBS). The method includes that: a pre-stored standard video code stream is converted into a CVBS; Analogue-to-Digital (A/D) conversion is performed on the CVBS, and a numerical value corresponding to each line of converted CVBS is stored according to a line-field synchronization signal in the converted signal; and the quality of the CVBS is calculated according to the stored numerical value corresponding to each line of CVBS. Also disclosed is a device for implementing the method and a storage medium.

FIG. 1

convert a pre-stored standard video code stream into a CVBS — 101

perform A/D conversion on the CVBS, and store a numerical value corresponding to each line of converted CVBS according to a line-field synchronization signal in the converted signal — 102

calculate the quality of the CVBS according to the stored numerical value corresponding to each line of CVBS — 103

EP 3 223 520 A1

## Description

## TECHNICAL FIELD

The disclosure relates to the technical field of video signal performance testing, and in particular to a method and device for measuring quality of a Composite Video Broadcast Signal (CVBS), and a storage medium.

## BACKGROUND

The CVBS (color, video, blanking and synchronization signal) is a complicated composite video signal; it contains multiple indexes like analog voltage level, time interval and border rate. At present, there are extensive researches and tests on video signal acquiring, recording and processing systems, for example, a video capture card, an image recorder and a television tracking system.
The automation degree of the existing process of measuring the quality of the CVBS is low, so the measurement effect is not very good. Even some existing expensive professional testing devices depend on the settings and manual operations of testers during the test process, which not only causes a high test cost, but also inevitably introduces an artificial error. Therefore, in the current rapid growth period of demand of the digital set-top box market, an automatic, efficient and low-cost measuring method is needed.

## SUMMARY

For solving the existing technical problem, the disclosure provides a method and device for measuring quality of a CVBS, and a storage medium.
A method for measuring quality of a CVBS is provided, which includes that:

a pre-stored standard video code stream is converted into a CVBS; Analogue-to-Digital (A/D) conversion is performed on the CVBS, and a numerical value corresponding to each line of converted CVBS is stored according to a line-field synchronization signal in the converted signal; and the quality of the CVBS is calculated according to the stored numerical value corresponding to each line of CVBS.

In an embodiment, the method further includes that:

the A/D conversion is performed on the CVBS and positioning of the line-field synchronization signal is performed, so that the numerical value corresponding to each line of converted CVBS and the line-field synchronization signal are obtained.

In an embodiment, the method further includes that: the quality of the CVBS obtained by calculating is displayed.

In an embodiment, that the quality of the CVBS is calculated according to the stored numerical value corresponding to each line of CVBS includes that:

the stored numerical value corresponding to the CVBS in the corresponding line is extracted according to a CVBS measuring standard, and the quality of the CVBS is calculated according to the extracted numerical value corresponding to the CVBS.

A storage medium is also provided, which includes a set of instructions; the instruction, when being executed, cause at least one processor to perform the above operations.
A device for measuring quality of a CVBS is also provided, which includes: a first storage module, a running module, an A/D conversion module and a set-top box to be tested.
The first storage module is arranged to pre-store the standard video code stream.
The running module is arranged to transmit the standard video code stream pre-stored by the first storage module to the set-top box to be tested, store the numerical value corresponding to each line of converted CVBS according to a line-field synchronization signal in the signal converted by the A/D conversion module, and calculate the quality of the CVBS according to the stored numerical value corresponding to each line of CVBS.
The A/D conversion module is arranged to perform the A/D conversion on the CVBS output by the set-top box to be tested.
The set-top box to be tested is arranged to convert the standard video code stream into the CVBS and output the CVBS.
In an embodiment, the device further includes: a line-field synchronization signal positioning module, which is arranged to perform positioning of the line-field synchronization signal in the CVBS output by the set-top box to be tested, so as to obtain the line-field synchronization signal.
In an embodiment, the device further includes: a display module, which is arranged to display the calculated quality of the CVBS.
The running module includes: a transceiving module, a calculation processing module and a second storage module.
The transceiving module is arranged to transmit the standard video code stream pre-stored by the first storage module to the set-top box to be tested.
The calculation processing module is arranged to store the numerical value corresponding to each line of converted CVBS according to the line-field synchronization signal in the signal converted by the A/D conversion module into the second storage module, and calculate the quality of the CVBS according to the stored numerical value corresponding to each line of CVBS.
The second storage module is arranged to store the numerical value corresponding to each line of converted CVBS.

In an embodiment, the second storage module is a Random Access Memory (RAM).

In an embodiment, the RAM is divided according to a unit of time of rows and columns of an image.

According to the method and device for measuring quality of a CVBS and the storage medium provided by the disclosure, the pre-stored standard video code stream is converted into the CVBS; the A/D conversion is performed on the CVBS, and the numerical value corresponding to each line of converted CVBS is stored according to the line-field synchronization signal in the converted signal; and the quality of the CVBS is calculated according to the stored numerical value corresponding to each line of CVBS. The disclosure adopts the standard video code stream, and may be implemented by using a Field Programmable Gate Array (FPGA) as the hardware core. Compared with the traditional measuring method, the method provided by the disclosure is not only low in cost of testing environment and easy to extend functions, but also can fast and simply test all indexes one time without the complicated process of manually operating instruments, so the automated testing level is raised greatly; besides, because the testing process does not need manual operation, adjustment and test of the instruments, the introduction of error is reduced and the accuracy is improved.

**BRIEF DESCRIPTION OF THE DRAWINGS**

In the accompanying drawings (which are not necessarily drawn to scale), similar accompanying drawing reference signs can describe similar components in different views. The similar accompanying drawing reference signs with different suffix letters can represent different examples of the similar components. The accompanying drawings generally show the embodiments discussed in the application by example but not in a limit way.

Fig. 1 is a flowchart of a method for measuring quality of a CVBS according to an embodiment of the disclosure;

Fig. 2 is a structure diagram of a FPGA that is employed to implement the method according to an embodiment of the disclosure;

Fig. 3 is a structure diagram of a device for measuring quality of a CVBS according to an embodiment of the disclosure;

Fig. 4 is a structure diagram of a running module in the device shown in Fig. 3.

Fig. 5 is a sequence diagram of a CVBS;

Fig. 6 is a schematic diagram of gradient change of a voltage value of a CVBS with time;

Fig. 7 is a 2T sine square waveform of a CVBS;

Fig. 8 is a schematic diagram of amplitude-frequency characteristic gain change of a CVBS; and

Fig. 9 is a schematic diagram of chrominance/luminance gain difference and delay difference of a CVBS.

**DETAILED DESCRIPTION**

In the embodiment of the disclosure, a pre-stored standard video code stream is converted into a CVBS; A/D conversion is performed on the CVBS, and a numerical value corresponding to each line of converted CVBS is stored respectively according to a line-field synchronization signal in the converted signal; and the quality of the CVBS is calculated according to the stored numerical value corresponding to each line of CVBS.

The disclosure is further elaborated in combination with the accompanying drawings and specific embodiments.

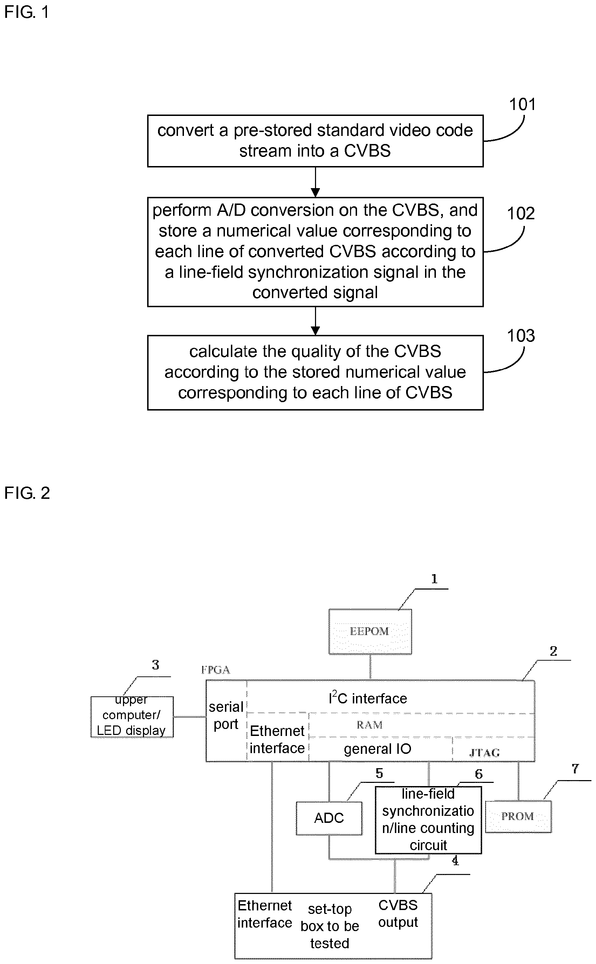

Fig. 1 is a flowchart of a method for measuring quality of a CVBS according to an embodiment of the disclosure. As shown in Fig. 1, the method includes the following steps 101 to 103.

In Step 101, a pre-stored standard video code stream is converted into a CVBS;

In Step 102, A/D conversion is performed on the CVBS, and a numerical value corresponding to each line of converted CVBS is stored respectively according to a line-field synchronization signal in the converted signal.

In Step 103, the quality of the CVBS is calculated according to the stored numerical value corresponding to each line of CVBS.

In an embodiment of the disclosure, the pre-stored standard video code stream can be transmitted to a set-top box to be tested, and then the set-top box to be tested converts the standard video code stream into the CVBS.

In an embodiment of the disclosure, the method further includes that: the A/D conversion is performed on the CVBS and positioning of the line-field synchronization signal is performed, so that the numerical value corresponding to each line of converted CVBS and the line-field synchronization signal are obtained.

Here, in order to find the line-field synchronization signal more accurately and reliably, an independent line-field synchronization/line counting circuit can be adopted to position the line-field synchronization signal. Certainly, if a noise signal is not taken into consideration, the line-field synchronization signal can be directly obtained from the CVBS after the A/D conversion.

In an embodiment of the disclosure, the disclosure further includes that: the calculated quality of the CVBS is displayed.

In an embodiment of the disclosure, calculation of the quality of the CVBS according to the stored numerical value corresponding to each line of CVBS in Step 103 includes that:

the stored numerical value corresponding to the CVBS in the corresponding line is extracted according to a CVBS measuring standard, and the quality of the CVBS is calculated according to the extracted numerical value corresponding to the CVBS.

The calculation method is performed based on the corresponding formulae in the existing CVBS measuring standard, which will be described hereinafter.

At present, because there are quiet rich resources in an Field Programmable Gate Array (FPGA) device, and many functional modules can be generated or called directly, the main function of the embodiment of the disclosure can be implemented through the FPGA, which can simplify the design difficulty and cost.

The embodiment of the disclosure also provides a storage medium, which includes a set of instructions, the instructions, when being executed, trigger at least one processor to perform the above operations.

Fig. 2 is a structure diagram that the method is implemented by adopting the FPGA according to an embodiment of the disclosure. As shown in Fig. 2, after the system is powered on, the FPGA reads the standard video code stream, e.g. CCITTO.33 code stream (a standard test image), from a plug-in Electrically Erasable Programmable Read-Only Memory (EEPROM) 1, and outputs the standard video code stream to an Ethernet interface of the set-top box to be tested 4 through its own Ethernet interface; the set-top box to be tested generates the CVBS after receiving the digital image signal, and transmits the CVBS to an Analogue to Digital Converter (ADC) 5 for the A/D conversion; besides, CVBS is also transmitted to the line-field synchronization/line counting circuit 6 (here, in consideration of the interference of the noise signal, the line-field synchronization circuit 6 is employed to position the line-field synchronization signal), and the FPGA 2 determines an address where the A/D converted numerical value (the voltage value) corresponding to each line of CVBS is stored according to the line-field synchronization signal output by the line-field synchronization/line counting circuit 6, that is, the FPGA 2 determines the address of RAM unit at which the numerical value corresponding to each line of CVBS is stored, and then the precision of a voltage signal and information about the position of the signal on a timeline can be determined according to a size of the data output by the ADC 5 (the position information and the A/D converted address stored in the internal RAM are in linear mapping); once there is the voltage value corresponding to each line of CVBS in the RAM, quality indexes of each CVBS can be calculated according to the formulae specified in a protocol. Moreover, the final calculation result can be selectively displayed on an upper computer or an LED display 3 intuitively and conveniently through a serial port.

In the present embodiment, the A/D converted data of single line of CVBS strictly corresponds to the address of RAM unit according to an appearing sequence of signals, which is advantaged in that data processing can determine the address of RAM unit intuitively only by referencing a sequence diagram, thus greatly simplifying the difficulty of logical design. The line counting circuit is used for finding the number of the line at which the pattern for index test is located in a standard test code stream.

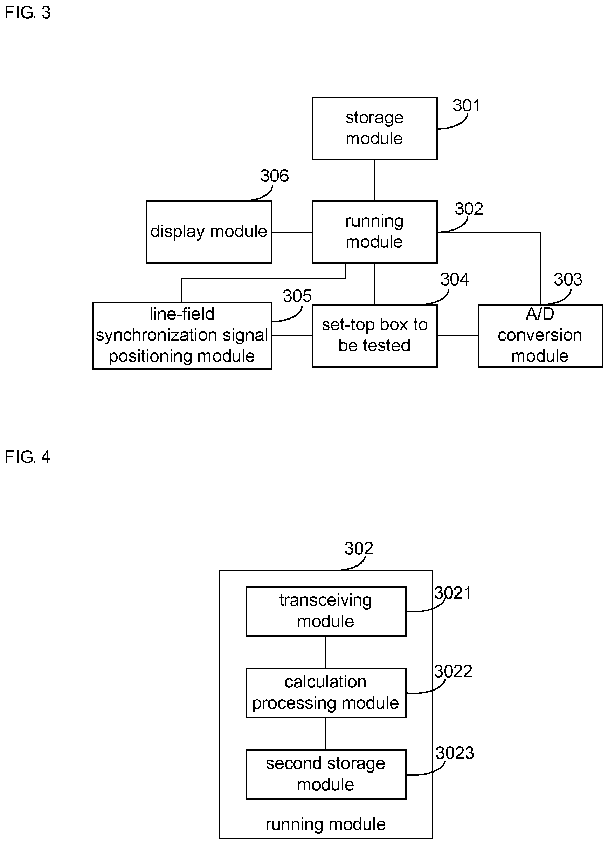

Fig. 3 is a structure diagram of a device for measuring quality of a CVBS according to an embodiment of the disclosure. As shown in Fig. 3, the device includes: a first storage module 301, a running module 302, an A/D conversion module 303 and a set-top box to be tested 304.

The first storage module 301 may be a memory, which is arranged to pre-store the standard video code stream.

The running module 302 is arranged to transmit the standard video code stream pre-stored by the first storage module to the set-top box to be tested, store the numerical value corresponding to each line of converted CVBS according to a line-field synchronization signal in the A/D converted signal by the A/D conversion module, and calculate the quality of the CVBS according to the stored numerical value corresponding to each line of CVBS.

In an embodiment, that the running module 302 calculates the quality of the CVBS according to the stored numerical value corresponding to each line of CVBS includes that:

the stored numerical value corresponding to the CVBS in the corresponding line is extracted according to a CVBS measuring standard, and the quality of the CVBS is calculated according to the extracted numerical value corresponding to the CVBS.

The calculation method is performed based on the corresponding formulae in the existing CVBS measuring standard, which will be described hereinafter.

The A/D conversion module 303 can be implemented by the ADC, and is arranged to perform the A/D conversion on the CVBS output by the set-top box to be tested.

The set-top box to be tested 304 is the test object in the scenario in which the embodiment of the disclosure is used, and is arranged to convert the standard video code stream into the CVBS and output the CVBS.

In an embodiment, the device further includes: a line-field synchronization signal positioning module 305, which is arranged to perform positioning of the line-field synchronization signal on the CVBS output by the set-top box to be tested, so as to obtain the line-field synchronization signal.

The running module 302 and the line-field synchronization signal positioning module 305 may be implemented by a Central Processing Unit (CPU), a Digital Signal Processor (DSP) or an FPGA.

Here, in order to find the line-field synchronization signal more accurately and reliably, the independent line-field synchronization/line counting circuit can be employed to position the line-field synchronization signal. Certainly, if a noise signal is not taken into consideration, the line-field synchronization signal can be directly obtained from the A/D converted CVBS.

In an embodiment of the disclosure, the device further includes: a display module 306, which is arranged to display the calculated quality of the CVBS.

The embodiment of the disclosure adopts the standard video code stream, and can be implemented by using the FPGA as the hardware core. Compared with the traditional testing method, the method provided by the disclosure is not only low in cost of testing environment and easy to extend functions, but also can fast and simply test all indexes one time without the complicated process of manually operating instruments, and thus the automated testing level is raised greatly; besides, because the testing process does not need manual operation, adjustment or test of the instruments, the introduction of error is reduced and the accuracy is improved.

In an embodiment, as shown in Fig. 4, the running module 302 includes: a transceiving module 3021, a calculation processing module 3022 and a second storage module 3023.

The transceiving module 3021 is arranged to transmit the standard video code stream pre-stored by the first storage module to the set-top box to be tested.

The calculation processing module 3022 is arranged to store the numerical value corresponding to each line of converted CVBS according to the line-field synchronization signal in the A/D converted signal by the A/D conversion module into the second storage module, and calculate the quality of the CVBS according to the stored numerical value corresponding to each line of CVBS.

The second storage module 3023 is arranged to store the numerical value corresponding to each line of converted CVBS.

In practical application, as shown in Fig. 2, the first storage module 301 may be implemented by the EEPROM, and store the standard CCITTO.33 video code stream which is standard and general data; these standard data is output to the set-top box to be tested 4 via the FPGA 2 in Fig. 2 to generate the basic CVBS of the standard pattern for testing the indexes. The data in the EEPROM is logically output to the FPGA through an I2C interface bus set in the FPGA.

The running module 302 may be implemented by the FPGA. which is the core part of the device, and achieves data reception and transmission, data storage, data processing, calculation of signal quality indexes, and serves as an interface with peripheral devices. At present, there are quiet rich resources in the FPGA device, in which many functional modules can be generated or called directly; the embodiment of disclosure can make full use of its internal resources to simplify the design difficulty and cost.

The A/D conversion module 303 may be implemented by the ADC, which receives an analogue CVBS signal output by the set-top box to be tested, and performs high-speed and high-precision A/D conversion on the signal; the signal output by the A/D conversion module is the digital signal for the FPGA 2 to perform data processing.

Regarding the selection of ADC conversion rate: by taking the generally used color standard-definition PAL system for example, the image resolution is 768x576, 25 frames per second, the vertical resolution is 625 (there are only 576 active lines, that is, the number of lines actually used for transferring image and information is 576), the line rate (line/second) is 25x625=15625. The time of duration of each line is 64us, and the time of duration of the active line is 52us; it can be known from these data that if it is needed to process 768x576 pixels in 40ms (a frame), that is, it is needed to complete the A/D conversion of an analogue quantity in 83ns, then the conversion rate of the ADC cannot be lower than 1/83=12.048MSPS. If it is considered from a pixel clock of the PAL system, because the pixel clock is about 13.5MHz, for reducing the system power consumption and ensuring the sampling accuracy, a sampled signal obtained according to the sampling theorem should be at least 27MHz; the pixel clock is used for synchronizing effective pixel signals; each pixel clock outputs the voltage value of a pixel.

To sum up, the embodiment of the disclosure can select the ADC of which conversion rate is not less than 27MSPS; AD9433 is a 12-bit monolithic sampling ADC, which is convenient to use; the conversion rate of the product reaches up to 125MSPS, and its design is optimized for adapting to the bandwidth.

The line-field synchronization signal positioning module 305 may be implemented by the line-field synchronization/line counting circuit. There is usually noise in the actual video signal, for finding out the line-field synchronization signal accurately and reliably, the independent line-field synchronization circuit must be used (if the noise signal is not taken into consideration, the line-field synchronization signal can be positioned from the A/D converted digital signal according to the waveform characteristic of the CVBS); the generated line-field synchronization signal serves as a positioning signal of a reading and writing address of the RAM unit in the FPGA 2; there are many mature line-field synchronization/line counting circuits, which will not be elaborated here.

The display module 306 may be implemented by an upper computer/a LED display.

Moreover, a configuration memory of the FPGA is also provided in Fig. 2, namely the PROM 7 in the figure. When being powered on, the system automatically downloads a download file of the FPGA, namely the logic in the FPGA (the corresponding operations performed by the FPGA in the whole flow of the method), from the PROM to the FPGA.

In the present embodiment, the A/D converted data of single line of CVBS strictly corresponds to the address of RAM unit according to the appearing sequence of signals, in such a manner, data processing can determine the address of RAM unit intuitively only by referencing the sequence diagram, thus greatly simplifying the difficulty of logical design.

As mentioned above, for conveniently and intuitively determining signal levels in a frame of image and the corresponding pixels, the present embodiment divides the RAM in the FPGA according to a unit of time of rows and columns of the image, and each unit can be 12 bits in width. The variation characteristic of values (namely the signal levels) in the RAM and the RAM address can be conveniently mapped to levels and positions on the time sequence of test signals. A method for automatically measuring each index of the CVBS is introduced below according the CVBS video measuring index requirement of the State Administration of Radio, Film and Television.

Regarding measurement of video output amplitude and video synchronization amplitude:

First, the FPGA reads the standard testing code stream from the EEPROM, and outputs the standard testing code stream to the set-top box to be tested through the Ethernet port; after receiving the code stream data, the set-top box to be tested adds a line synchronization header and a blanking level, and outputs the video signal at a CVBS interface after D/A conversion. When the testing system of the embodiment of the disclosure performs the A/D conversion on the CVBS, a conversion period is set as 37.037ns (namely the conversion rate is 27MSPS), the data after the A/D conversion is stored in the RAM in the FPGA; this process is the same as the subsequent processes of testing the other indexes, and the difference is that the line counting value may be different, so this section will not be described in detail, but is summarized as "the testing system reads the standard testing code stream from the memory, and the set-top box to be tested generates and outputs the CVBS".

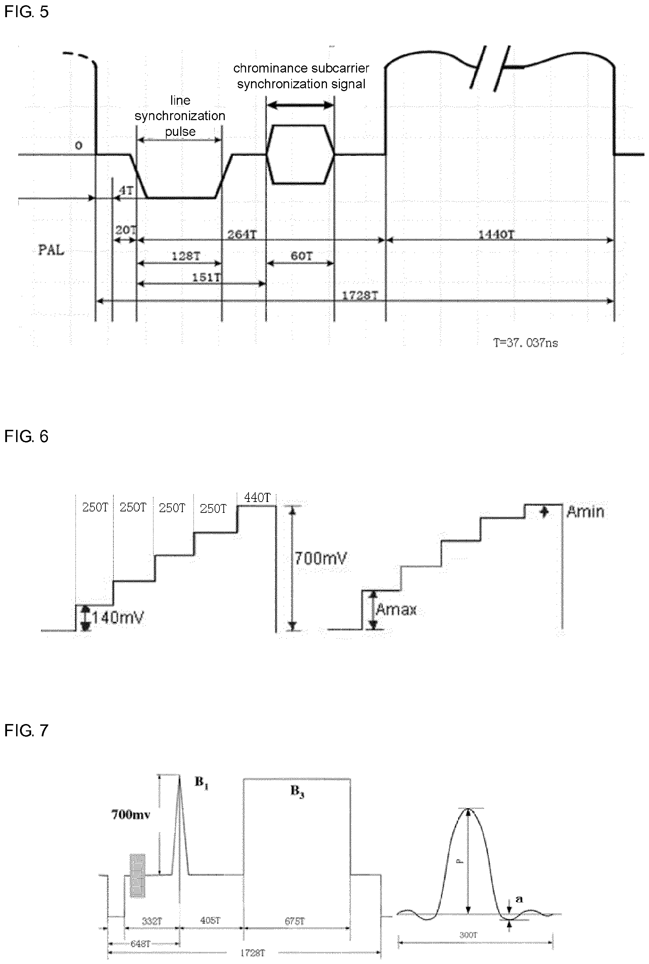

It can be seen from the sequence diagram (shown in Fig. 5) of the CVBS line signal that in the ideal case, when a line counter is equal to 36 (the middle part of the white bar of the testing pattern is selected), the contents of the last 1440 units (the data in the application are decimal for describing conveniently) in the RAM space should be 1400 (namely the level is 700mv); for filtering out interference to obtain the actual testing result, the average value of the contents of the last 1440 units may be calculated as the video output amplitude. The calculation of the video synchronization amplitude is calculating, from 25 of the RAM address, the average value of the contents of 128 units.

Regarding measurement on luminance nonlinearity

The testing system reads the standard testing code stream from the memory, and the set-top box to be tested generates and outputs the CVBS; when the line counter is 36 (near the middle number of line), in an ideal case, the contents of the last 1440 units in the RAM changes according to the time and amplitude of the gradient; as shown in Fig. 6, that is, each 250 units are added with 280 (representing 140mv); for filtering out interference to obtain the actual testing result, the final result is calculated based on the average value of 250 units according to the formula: degree of nonlinearity = (Amax-Amin)/Amax*100%.

Measurement of the coefficient K is as follows.

There are several definitions on the coefficient K, but generally 2T sine square wave distortion (K-2T) is adopted as the index to be tested, and its time sequence and amplitude are shown in Fig. 7.

When the index is tested, the testing system reads the standard measuring code stream from the memory, and the set-top box to be tested generates and outputs the CVBS; when the line counter is 36, the testing system determines, after the A/D conversion, an address range of the RAM where related parameters are located according to a time sequence relationship in Fig. 7, finds the actual P (namely the maximum value) and *a* (namely a ringing amplitude at the bottom of a pulse, which is the minimum value in Fig. 7) after comparing the values in the address range (at this point, the unit address is 648, and there are respectively 150 storage units in front of and at the back of it, so there are 301 units), and calculates the coefficient K.

Measurement of the video amplitude-frequency characteristic is as follows.

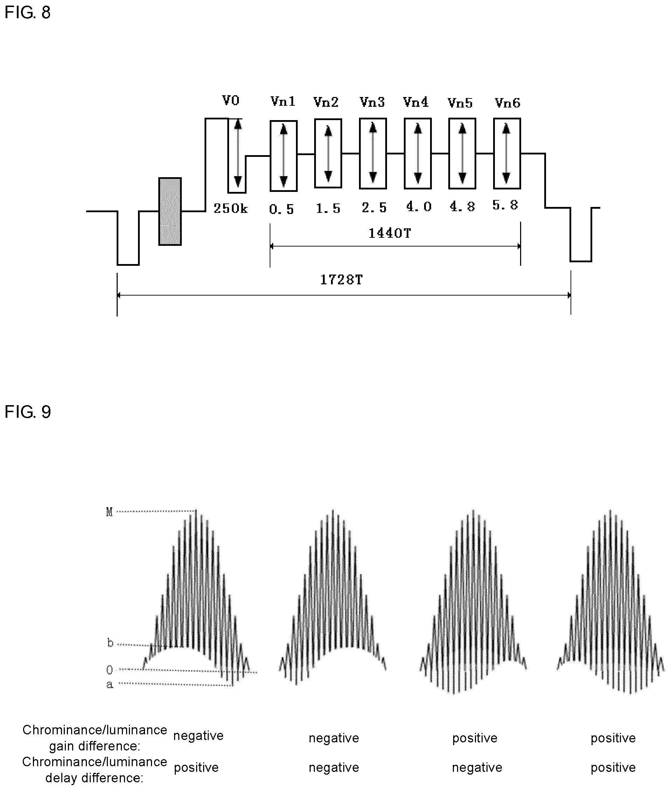

The definition of the index is a gain change relative to the reference point frequency 250KHz between input and output of a channel in a frequency band range from a field frequency (low frequency) to a system nominal cut-off frequency (high frequency), the unit of the gain change is dB, as shown in Fig. 8. The square signal of 250KHz starts from 10.5us of the front edge of the line synchronization signal; the square signal has abundant high-frequency components, can sensitively reflect overshoot distortion of the channel, and is often used for measuring transition property of channel and transition distortion of high-frequency pulse.

The selection of frequencies shall try to avoid the integral multiple relationship between each other, to reduce the mutual effect of harmonic waves thereof. It is considered that a subcarrier 4.43M is set in the middle, so as to estimate the influence of channel on it. The protocol suggests that the signal gains of the sine waves with six frequencies are measured; the six frequencies are respectively:

0.5M, 1.5M, 2.5M, 4.0M, 4.8M and 5.8M.

The testing way is the same as the above, that is, the testing system reads the standard testing code stream from the memory, and the set-top box to be tested generates and outputs the CVBS; when the line counter is 155, there are Vns of six frequencies in 1440 RAM units, and each 240 storage units store the Vn of a frequency point; the average value of 240 units is calculated; V0 is calculated in the same way. After the V0 and the Vn of each frequency point are obtained, the amplitude-frequency characteristic of the signal can be calculated according to the formula $20\lg\dfrac{Vn}{V0}$.

Note that, the protocol specifies that the selection of V0 is 250KHz signal amplitude when the amplitude/video characteristic is measured, and is 1.5MHz sine wave signal amplitude when the amplitude/radio-frequency characteristic is measured.

Measurement of Signal to Noise Ratio (SNR) is as follows.

The SNR is generally not measured directly, but is obtained by conversion after measuring the amplitude of the noise signal; the usual way is that: when a standard signal is given to the module to be tested (which is the set-top box in the application), which is usually 0.775Vrms, an output amplitude Vs (namely the average value of the last 1440 RAM units when the line counter is 61) of an amplifier is recorded, and then an input signal is removed; a noise voltage occurring on an output end now is measured and recorded as Vn, and then the SNR can be calculated according to the formula SNR=20LOG(Vn/Vs).

Measurement of chrominance/luminance gain and chrominance/luminance delay is as follows.

The testing process is that: the standard measuring code stream is output to the set-top box to be tested; the set-top box uses the standard code stream that generates a luminance component for determining amplitude and waveform, and composes a composite signal after modulating a chrominance subcarrier; in the composite signal, the luminance component and the chrominance component have the determined relationship in both the amplitude and time. During the testing, after the signal goes through encoding, the D/A conversion and a filtering drive circuit, an output chrominance and luminance signal is changed in relation to the input signal in an amplitude ratio of the chrominance component to the luminance component, which is called chrominance/luminance gain difference ΔK; the difference value between the corresponding parts of modulation envelope waveforms of the luminance component and the chrominance component occurring on the time relationship is called chrominance/luminance delay difference ΔT; the modulation signal waveform of different positive and negative combinations of ΔK and ΔT is shown in Fig. 9.

When the line counter is 36, the 10T pulse is extended, as shown in Fig. 9; the convex amplitude at the bottom of the 10T pulse waveform, namely the voltage amplitude from 0 to *a* is recorded as Va; the concave amplitude, namely the voltage amplitude from 0 to b is recorded as Vb; the voltage amplitude from 0 to M is Vmax. During the testing, the method for confirming the three parameters is as follows:

the confirmation of Vmax is that: it is only needed to find the maximum value in the RAM unit in the interval;

the confirmation of Va is that: it is only needed to find the minimum value in the RAM unit in the interval;

the confirmation of Vb is that: it can be seen from the positive and negative combinations of ΔK and ΔT shown in Fig. 9 that the confirmation of Vb needs to first find a series of change inflection points, from small to large, appearing at low bits according to the change of sampled data each time, and then find out the maximum value, namely Vb, from these inflection points. For this purpose, the specific method provided by the present embodiment of the disclosure includes the following steps.

Step 1: a "state bit" is set for identifying whether the current sampled data is "rising" or "dropping" after being compared with the previous sampled data; if the current sampled data is greater than the previous sampled data, the state bit is set as "rising", or else, it is set as "dropping".

Step 2: an "alternative inflection point" storage area is set for storing the level values of all possible inflection points; if the current sampled data is greater than the previous sampled data, and the "state bit" before update is "dropping", the data is stored in the "alternative inflection point" storage area; if the current sampled data is greater than the previous sampled data, but the "state bit" before update is "rising", the data is not stored in the "alternative inflection point" storage area.

Step 3: the maximum value in the "alternative inflection point" storage area is found out, namely Vb.

After Vmax, Va and Vb are obtained, the chrominance/luminance gain difference ΔK and the chrominance/luminance delay difference ΔT are calculated as follows.

For example, if Vmax=700mv, Va=35mv, and Vb=34mv, then,

$$ra= \frac{Va}{Vmax} =0.05; \quad rb= \frac{Vb}{Vmax} =0.02;$$

$$\Delta K= \frac{\frac{2(ra-rb)}{1+ra-rb} \times 100\%}{} =5.8\%;$$

$$\Delta T= \frac{4nT\sqrt{ra \times rb}}{\pi} =33.5 \; (ns).$$

For the television system in our country, the upper limit of video bandwidth fc is equal to 6MHz; in the national standard, T is used for defining the sine square wave, and T is a half of reciprocal of the nominal upper limit, so T is equal to 83.3ns.

The manner of calculating the chrominance/luminance gain difference ΔK and the chrominance/luminance delay difference ΔT by finding the inflection points to determine the Vb in the embodiment of the disclosure is not influenced by increasing of the sampling frequency, even in some scenarios, after the sampling rate is increased for improving the sampling precision, the size of the "alternative inflection point" storage area is not increased, and the logical design scale and difficulty is not increased, only the number of times of comparing the sampling result with the previous sampling value is increased. Therefore, such a manner has good expansibility and universality, and the whole process is completed by automatic sampling and calculation, thus avoiding artificial error caused by manually operating the instruments and observing the waveform.

The embodiment of the disclosure makes optimization and creation in storage and identification of data, and especially puts forward a simpler and more reliable method for calculating the crucial process variables which are used for testing the indexes like chrominance/luminance delay and chrominance/luminance gain. Moreover, because of using the 12-bit ADC, the testing precision of the indexes is improved to a large extent, and all measurement results can be automatically displayed and output once.

Those skilled in the art should appreciate that the embodiments of the application can be provided as a method, a system or a computer program product. So, this application can adopt the forms of full hardware embodiment, full software embodiment, or embodiment combining software and hardware. Besides, this application can adopt the form of a computer program product which is implemented on one or more computer available storage media including computer available program codes, wherein the storage media include, but are not limited to, a magnetic disk memory, an optical memory, and so on.

This application is described according to the flowcharts and/or block diagrams of the method, the device (system) and the computer program product in the embodiments of this application. It should be understood that each flow and/or block in the flowchart and/or block diagram, and the combination of the flow and/or block in the flowchart and/or block diagram can be implemented by the computer program instructions. These computer program instructions can be provided to the processing unit of the general-purpose computer, the special-purpose computer, the embedded processor or other programmable data processing equipment to generate a machine, so that instructions which are executed by the processing unit of the computer or other programmable data processing equipment generate the device which is used for implementing the specified functions in one or more flows of the flowchart and/or one or more blocks of the block diagram.

These computer program instructions can also be stored in the computer-readable memory which can guide the computer or other programmable data processing equipment to work in a particular way, so that the instructions stored in the computer-readable memory generate the product including the instruction device, wherein the instruction device implements the specified functions in one or more flows of the flowchart and/or one or more blocks of the block diagram.

These computer program instructions can also be loaded on the computer or other programmable data processing equipment, so that a series of operation steps are performed on the computer or other programmable data processing equipment to generate the processing implemented by the computer, and the instructions executed on the computer or other programmable data processing equipment provide the steps for implementing the specified functions in one or more flows of the flowchart and/or one or more blocks of the block diagram

The above is only the preferred embodiments of the disclosure, and is not intended to limit the protection scope of the disclosure.

**Claims**

1.  A method for measuring quality of a Composite Video Broadcast Signal, CVBS, comprising:

    converting a pre-stored standard video code stream into a CVBS;
    performing Analogue-to-Digital, A/D, conversion on the CVBS, and storing a numerical value corresponding to each line of the converted CVBS according to a line-field synchronization signal in the converted signal; and
    calculating the quality of the CVBS according to the stored numerical value corresponding to each line of the CVBS.

**2.** The method according to claim 1, further comprising:

> performing A/D conversion on the CVBS to obtain the numerical value corresponding to each line of the converted CVBS; and
> positioning the line-field synchronization signal in the CVBS to obtain the line-field synchronization signal.

**3.** The method according to claim 1, further comprising:

> displaying the calculated quality of the CVBS.

**4.** The method according to claim 1, wherein calculating the quality of the CVBS according to the stored numerical value corresponding to each line of CVBS comprises:

> extracting the stored numerical values corresponding to respective lines of the CVBS according to a CVBS measuring standard, and calculating the quality of the CVBS according to the extracted numerical values corresponding to the CVBS.

**5.** A device for measuring quality of a Composite Video Broadcast Signal, CVBS, comprising: a first storage module, a running module, an Analogue-to-Digital, A/D, conversion module and a set-top box to be tested; wherein,
the first storage module is arranged to pre-store a standard video code stream;
the running module is arranged to transmit the standard video code stream pre-stored by the first storage module to the set-top box to be tested, store a numerical value corresponding to each line of a converted CVBS according to a line-field synchronization signal in the signal converted by the A/D conversion module, and calculate the quality of the CVBS according to the stored numerical value corresponding to each line of CVBS;
the A/D conversion module is arranged to perform A/D conversion on the CVBS output by the set-top box to be tested; and
the set-top box to be tested is arranged to convert the standard video code stream into the CVBS and output the CVBS.

**6.** The device according to claim 5, further comprising: a line-field synchronization signal positioning module, which is arranged to position the line-field synchronization signal in the CVBS output by the set-top box to be tested, so as to obtain the line-field synchronization signal.

**7.** The device according to claim 5, further comprising: a display module, which is arranged to display the calculated quality of the CVBS.

**8.** The device according to claim 5, wherein the running module comprises: a transceiving module, a calculation processing module and a second storage module; wherein,
the transceiving module is arranged to transmit the standard video code stream pre-stored by the first storage module to the set-top box to be tested;
the calculation processing module is arranged to store the numerical value corresponding to each line of converted CVBS according to the line-field synchronization signal in the signal converted by the A/D conversion module into the second storage module, and calculate the quality of the CVBS according to the stored numerical value corresponding to each line of CVBS; and
the second storage module is arranged to store the numerical value corresponding to each line of converted CVBS.

**9.** The device according to claim 8, wherein the second storage module is a Random Access Memory, RAM.

**10.** The device according to claim 9, wherein the RAM is divided according to a unit of time of rows and columns of an image.

**11.** A storage medium, comprising a set of instructions; the instructions, when being executed, cause at least one processor to perform operations according to any one of claims 1 to 4.

FIG. 1

```
101  convert a pre-stored standard video code
     stream into a CVBS

102  perform A/D conversion on the CVBS, and
     store a numerical value corresponding to
     each line of converted CVBS according to
     a line-field synchronization signal in the
     converted signal

103  calculate the quality of the CVBS
     according to the stored numerical value
     corresponding to each line of CVBS
```

FIG. 2

FIG. 3

storage
module          301

306

display module      running
module          302

line-field              set-top box to      A/D
synchronization signal  305    be tested   304   conversion
positioning module                          303   module

FIG. 4

302

transceiving
module          3021

calculation
processing module   3022

second storage
module          3023

running module

FIG. 5

line
synchronization
pulse

chrominance subcarrier
synchronization signal

PAL

FIG. 6

FIG. 7

FIG. 8

| V0 | Vn1 | Vn2 | Vn3 | Vn4 | Vn5 | Vn6 |

250k  0.5  1.5  2.5  4.0  4.8  5.8

1440T

1728T

FIG. 9

| | negative | negative | positive | positive |
| Chrominance/luminance gain difference: | | | | |
| Chrominance/luminance delay difference: | positive | negative | negative | positive |

# INTERNATIONAL SEARCH REPORT

| International application No. |
| --- |
| PCT/CN2015/074278 |

### A. CLASSIFICATION OF SUBJECT MATTER

H04N 17/00 (2006.01) i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

WPI, EPODOC, CNPAT, CNKI: detect, text, analog-digital, COMPOSITE, VIDEO, BROADCAST, CVBS, TV, TELEVISION, QUALITY, MEASUR+, CONVERT+, TRANSFORM+, STANDARD, REFERENCE, ANALOG, DIGITAL, ADC, SYNC+, ROW

### C. DOCUMENTS CONSIDERED TO BE RELEVANT

| Category* | Citation of document, with indication, where appropriate, of the relevant passages | Relevant to claim No. |
| --- | --- | --- |
| A | CN 101304542 A (MEDIATEK INC.), 12 November 2008 (12.11.2008), description, page 2, paragraph 1, and page 4, paragraph 2 to page 5, paragraph 2, and figure 2 | 1-11 |
| A | CN 102263964 A (BEIJING INNOFIDEI TECHNOLOGY CO., LTD.), 30 November 2011 (30.11.2011), the whole document | 1-11 |
| A | US 6441847 B1 (XSYS INTERACTIVE RESEARCH GMBH), 27 August 2002 (27.08.2002), the whole document | 1-11 |
| A | US 2009180548 A1 (HUAYA MICROELECTRONICS, INC.), 16 July 2009 (16.07.2009), the whole document | 1-11 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 August 2015 (04.08.2015) | **17 August 2015 (17.08.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Ming** Telephone No.: (86-10) **62413679** |
| --- | --- |

Form PCT/ISA/210 (second sheet) (July 2009)

## INTERNATIONAL SEARCH REPORT
### Information on patent family members

| International application No. |
| --- |
| **PCT/CN2015/074278** |

| Patent Documents referred in the Report | Publication Date | Patent Family | Publication Date |
| --- | --- | --- | --- |
| CN 101304542 A | 12 November 2008 | US 2008281544 A1 | 13 November 2008 |
| | | TW 200845258 A | 16 November 2008 |
| CN 102263964 A | 30 November 2011 | None | |
| US 6441847 B1 | 27 August 2002 | DE 19743124 A1 | 01 April 1999 |
| | | EP 0941618 A1 | 15 September 1999 |
| | | JP 2001511334 A | 07 August 2001 |
| | | KR 20000069200 A | 25 November 2000 |
| | | WO 9917557 A1 | 08 April 1999 |
| | | DE 59813808 D1 | 28 December 2006 |
| US 2009180548 A1 | 16 July 2009 | US 2009180556 A1 | 16 July 2009 |
| | | US 2009180554 A1 | 16 July 2009 |
| | | US 2009180027 A1 | 16 July 2009 |
| | | US 2013155328 A1 | 20 June 2013 |

Form PCT/ISA/210 (patent family annex) (July 2009)